# EUROPÄISCHE PATENTSCHRIFT

(11) **EP 3 246 129 B1**
(45) Veröffentlichungstag und Bekanntmachung des Hinweises auf die Patenterteilung: **12.06.2019**
(21) Anmeldenummer: 17169250.2
(22) Anmeldetag: 03.05.2017
(51) Int. Cl.: B25B 23/00, B25G 3/20

(54) **AUSBEULRICHTHAKENWECHSELGRIFF**
CHANGEABLE HANDLE FOR FLATTENING ALIGNMENT HOOK
POIGNÉE DE CHANGEMENT DE CROCHET À DÉBOSSELER

(30) Priorität: 20.05.2016 DE 202016102687 U
(43) Veröffentlichungstag der Anmeldung: 22.11.2017
(73) Patentinhaber: Schächinger, Ulrich, 72202 Nagold (DE)
(72) Erfinder: Schächinger, Ulrich, 72202 Nagold (DE)
(74) Vertreter: Klocke, Peter

(56) Entgegenhaltungen:
- EP-A1- 2 145 736
- WO-A1-2004/004980
- DE-U1- 20 109 742
- FR-A3- 2 863 525
- JP-U- 3 203 711
- US-A- 2 600 723
- US-A1- 2004 074 349
- US-A1- 2009 165 606
- US-A1- 2014 174 264
- US-A1- 2015 266 173

## Beschreibung

Die vorliegende Erfindung betrifft einen Ausbeulrichthakenwechselgriff mit einem Handgriff und einer Griffstückkupplung. Sie betrifft außerdem einen Ausbeulrichthaken mit einem Kupplungsstück zum Einstecken in einen derartigen Wechselgriff.

Bei der lackschädenfreien Ausbeultechnik von Karosserieverformungen ist es erforderlich, je nach Anwendungsfall unterschiedliche Richthaken zu verwenden. Bekannt sind eine Vielfalt von unterschiedlichen Richthaken mit Wechselgriffen, die im 45° Abstand gegenüber der Längsachse des Richthakens verdrehbar sind, um je nach Erfordernis den Wechselgriff gegenüber dem Richthaken so verdrehen zu können, dass die Kräfte optimal aufgebracht werden können. Der Nachteil dieser bekannten Griffe liegt darin, dass keine Absicherung beim Verdrehen vorgesehen ist, so dass der Richthaken aus dem Wechselgriff herausrutschen kann und die Gefahr besteht, dass der Richthaken in die Öffnung an der Karosserie des Fahrzeuges fallen kann, und dass beim Wechsel der Griffe in eine andere Position der Wechselgriff komplett abgenommen und wieder neu aufgesteckt werden muss.

Zum Stand der Technik wird auf die Druckschriften US 2009/165606 A1, JP 3 203711 U, FR 2863525 A3, US 2015/266173 A1, US 2004/074349 A1, DE 201 09 742 U1 und US 2,600,723 verwiesen.

Die US 2009/165606 A1 offenbart ein Ratschenwerkzeug für die Aufnahme von Schraubbits mit Sechskantsockel, wobei das Ratschenwerkzeug einen Handgriff mit einer Griffstückkupplung und ein Aufnahmeteil für die Schraubbits aufweist, wobei das Aufnahmeteil lösbar mit der Griffstückkupplung verbunden ist und das Aufnahmeteil eine Verriegelungseinrichtung für die lösbare Halterung des Schraubbits aufweist. Die Griffstückkupplung weist eine Innenverzahnung und das Aufnahmeteil eine Außenverzahnung auf, die bei mit der Griffstückkupplung verbundenem Aufnahmeteil formschlüssig ineinandergreifen. Die Griffstückkupplung ist gegenüber dem Handgriff in einer Richtung drehbar lösbar verrastbar.

Die JP 3 203711 U lehrt ebenfalls ein Ratschenwerkzeug und zwar für die Aufnahme von Schraubnüssen mit Innenvierkant- oder Außensechskantanschluss, wobei das Aufnahmeteil austauschbar ist. Ansonsten unterscheidet sich dieses Ratschenwerkzeug kaum von dem in der US 2009/165606 A1 beschriebenen Ratschenwerkzeug.

Die FR 2863525 A3 offenbart noch ein Ratschenwerkzeug nach der Art des aus der JP 3 203711 U bekannten Ratschenwerkzeugs, jedoch mit einer speziellen Innenverzahnung der Griffstückkupplung und einer komplementär ausgebildeten Außenverzahnung des Aufnahmeteils.

Die US 2015/266173 A1 lehrt ein weiteres Ratschenwerkzeug, das ähnlich denen in der JP 3 203711 U und der FR 2863525 A3 vorgeschlagenen Ratschenwerkzeugen ausgebildet ist, jedoch für die Aufnahme von Schraubnüssen mit einem Außensechskantanschluss und mit einer speziellen Verriegelung hierfür,

Die US 2004/074349 A1 schlägt einen Schraubendreher für ein austauschbares Schrauberbit mit Sechskantsockel vor, wobei der Schraubendreher einen Handgriff mit einer Griffstückkupplung mit integriertem Aufnahmeteil für die Schraubbits aufweist, wobei das Aufnahmeteil eine Verriegelungseinrichtung für die lösbare Halterung des Schraubbits aufweist.

Die DE 201 09 742 U1 behandelt ein Ausbeulwerkzeug in Form eines Richthakens zum Ausbeulen von Hagelschäden, Parkdellen oder ähnlichem an Fahrzeugen und anderen Blechkonstruktionen, wobei mindestens ein Ende des hakenförmigen Ausbeulhebels mit einem angeformten Gewinde oder einem angeformten Zylinderzapfen mit eingelegtem Klemmfederring ausgeführt ist, auf das oder den Wechselaufsätze verschiedener Formen und Materialien geschraubt oder gesteckt werden können. Dabei ist mindestens ein Schaftende des Ausbeulhebels gerade ausgeführt und zur Aufnahme eines längenverschiebbaren und drehbaren Wechselgriffes vorgesehen, wobei der Wechselgriff in ein- oder zweiteiliger Ausführung mit einer oder mehreren Klemmschrauben auf dem geraden Werkzeugschaft an beliebiger Stelle in entsprechender Arbeitsposition arretiert werden kann und der Wechselgriff durch mindestens zwei Werkzeugaufnahmebohrungen sowohl als L- als auch als T-Griff verwendet werden kann.

Die US 2,600,723 offenbart ein Ausbeulwerkzeug für dünne Bleche, das insbesondere geeignet ist, aus Kotflügeln von Automobilen und anderen mehr oder weniger gebogenen Blechelementen Beulen zu entfernen. Das Werkzeug ist zangenförmig ausgebildet und weist zwei zusammenwirkende gebogene Werkzeugarme auf, die gelenkig miteinander verbunden und aufspreizbar sind. An den vorderen Enden der Werkzeugarme sind Ausbeulelemente lösbar angeordnet, die als Hammer- und Ambosselement ausgebildet sind. Zum Ausbeulen werden die Ausbeulelemente gegenüber dem auszubeulenden Blech derart angeordnet, dass sich die Beule zwischen dem Hammer- und dem Ambosselement befindet, und dann das Hammerelement mittels eines Handgriffes, der an dem hinteren Ende eines Werkzeugarmes angeordnet ist, mit Druck beaufschlagt. Dabei stützt sich das Blech an dem Ambosselement ab, so dass die Beule, die in Richtung des Hammerelementes vorsteht, durch die Einwirkung des Hammerelementes zurück gedrückt wird. Das Hammer- und das Ambosselement sind über Gewindeverbindungen an den vorderen freien Enden der beiden Werkzeugarme verschraubt und mittels Kontermuttern fixiert.

Der vorliegenden Erfindung liegt die Aufgabe zu Grunde, die vorstehenden Nachteile zu beseitigen und einen Ausbeulrichthakenwechselgriff vorzuschlagen, der für verschiedene Ausbeulrichthaken verwendbar ist und gleichzeitig eine Sicherung gegen unbeabsichtigtes Herausrutschen des Ausbeulrichthakens aus dem Wechselgriff beim Verdrehen des Wechselgriffes gegenüber dem Richthaken aufweist.

Diese Aufgabe wird erfindungsgemäß durch einen Ausbeulrichthakenwechselgriff mit den Merkmalen des Anspruchs 1 gelöst. Weitere vorteilhafte Ausgestaltungen sind in den Unteransprüchen angegeben. Beansprucht wird außerdem ein Ausbeulrichthaken mit einem Kupplungsstück zum Einstecken in den Ausbeulrichthakenwechselgriff, wobei das Kupplungsstück an den Ausbeulrichthakenwechselgriff angepasst ist.

Der erfindungsgemäße Ausbeulrichthakenwechselgriff weist eine Griffstückkupplung mit einer Aufnahme für ein mit einem Schaft eines Ausbeulrichthakens verbindbares oder verbundenes, an einem der Griffstückkupplung zugewandten Ende eine Außenverzahnung aufweisendes Kupplungsstück sowie eine Verriegelungseinrichtung für die lösbare Halterung des Kupplungsstücks gegen eine unbeabsichtigte axiale Bewegung aus der Griffstückkupplung und eine Arretierungseinrichtung für eine lösbare Lagerung der Außenverzahnung des Kupplungsstücks in einer Innenverzahnung in der Griffstückkupplung auf. Das Kupplungsstück ist lösbar in der Griffstückkupplung gelagert und gegenüber der Griffstückkupplung um eine von Schaft, Kupplungsstück und mindestens teilweise von der Griffstückkupplung gebildeten Längsachse verdrehbar gelagert. Der Wechselgriff ist vorteilhafterweise abgewinkelt und besteht aus einem Handgriff und der in einem Winkel dazu angeordneten Griffstückkupplung, wobei das Kupplungsstück Ausbeulrichthakens in die Griffstückkupplung des Ausbeulrichthakenwechselgriffes einsteckbar ist. Die Griffstückkupplung liegt mit dem Kupplungsstück und dem Schaft des Ausbeulrichthakens zweckmäßigerweise in einer Achse. An einem kupplungsseitigen Ende des Schaftes des Ausbeulrichthakens kann dieser mit dem Kupplungsstück verbunden werden. Am anderen Ende des Schaftes befindet sich der je nach Anwendungszweck entsprechend ausgestalteter Haken. Erfindungsgemäß ist das Kupplungsstück zylindrisch ausgebildet, wobei die Verriegelungseinrichtung für das Kupplungsstück Verriegelungsmittel aufweist, die in eine Vertiefung in einem in die Griffstückkupplung einsteckbaren Bereich des Kupplungsstücks eingreifen. Die an der Griffstückkupplung angeordneten Verriegelungsmittel sind nach Art einer Push-Pull-Verriegelung ausgebildet und weisen einen gegen eine Feder in axialer Richtung beweglichen Push-Pull-Verriegelungsring auf, der bei einer Bewegung gegen die Federkraft die in die Vertiefung eingreifenden Verriegelungsmittel freigibt. Bei den Push-Pull-Verriegelungsmittel handelt es sich um gängige Verriegelungsarten in Form von Kugeln, Federringen oder dergleichen.

Vorteilhafterweise weist die Griffstückkupplung ein Kupplungsgehäuse mit einer axialen Bohrung auf, in die auf der einen Seite das Kupplungsstück einsteckbar und auf der anderen Seite die Arretierungseinrichtung für das Kupplungsstück angeordnet ist. Die Arretierungseinrichtung ist in der Griffstückkupplung fixiert.

Vorteilhafterweise weist die Arretierungseinrichtung eine in axialer Richtung angeordnete Hülse auf, die durch eine stirnseitige Bohrung in den in dem Kupplungsstück angeordneten Hohlraum hineinragt. Die Hülse selbst weist im Bereich des Hohlraumes eine Arretierungseinrichtung gegen eine axiale Bewegung des Kupplungsstücks auf. Hierzu weist die Arretierungseinrichtung Arretierungsmittel bevorzugt einen in axialer Richtung gegen eine Federkraft in der Hülse beweglichen Bolzen zur Freigabe der Arretierungsmittel auf.

Zweckmäßigerweise weist der Bolzen im Bereich der Arretierungsmittel am Umfang mindestens eine Vertiefung zur Aufnahme der Arretierungsmittel bei einer Bewegung des Bolzens gegen die Federkraft auf, wobei die Arretierungsmittel mindestens eine Kugel aufweisen. Damit die Kugeln nicht herausfallen können, ist der Lauf in dem sich Kugeln bewegen, gemäß üblichen derartigen Ausgestaltungen konisch.

Ein erfindungsgemäß ausgestalteter Ausbeulrichthaken zum Einstecken in einen vorstehend beschriebenen Ausbeulrichthakenwechselgriff weist ein Kupplungsstück zum Einführen in die Griffstückkupplung des Ausbeulrichthakenwechselgriffes auf. Erfindungsgemäß ist das Kupplungsstück mit einem Schaft des Ausbeulrichthakens verbindbar oder verbunden ist und weist eine zylindrische Form auf. Das Kupplungsstückweist in einem in die Griffstückkupplung einsteckbaren Bereich wenigstens bereichsweise eine Vertiefung zur Aufnahme von in der Griffstückkupplung angeordneten Verriegelungsmitteln auf.

Der erfindungsgemäß ausgestaltete Ausbeulrichthakenwechselgriff ermöglicht es, einen Wechselgriff für verschiedene Richthaken vorzusehen, wobei das Kupplungsstück für den Ausbeulrichthakenwechselgriff je nach Ausgestaltung entweder fest mit dem jeweiligen Richthaken verbunden ist und damit beim Wechsel des Richthakens diese mit dem Kupplungsstück in den Wechselgriff, oder der Richthaken selbst durch entsprechende Ausgestaltung am Schaftende verdrehsicher in das Kupplungsstück eingesteckt wird. Damit ist der Ausbeulrichthakenwechselgriff vielseitig einsetzbar. Sofern der Richthaken fest mit einem Kupplungsstück verbunden ist, kann dieser durch axiales Einstecken in die Griffstückkupplung über die Push-Pull-Verriegelung gesichert werden.

Erfindungsgemäß weist das Kupplungsstück an einem der Griffstückkupplung zugewandten Ende eine Außenverzahnung auf, die mit in einer in der Griffstücckupplung angeordneten Innenverzahnung in axialer Richtung lösbar in Eingriff bringbar ist. Mit dieser Verzahnung kann der Wechselgriff gegenüber dem Richthaken verdreht werden. Das in der Griffstückkupplung befindliche Kupplungsstück wird zum einen durch die Push-Pull-Verriegelung und zusätzlich durch die Arretierungseinrichtung in der Innenverzahnung der Griffstückkupplung gehalten. Bei einem Verdrehen der Griffstückkupplung gegenüber dem Kupplungsstück/Richthaken wird durch die axiale Bewegung des in der Arretierungseinrichtung angeordneten Bolzens ermöglicht, dass die Außenverzahnung des Kupplungsstückes außer Eingriff mit der Innenverzahnung der Griffstückkupplung gelangen kann. Durch die zusätzliche Push-Pull-Verriegelung, wird verhindert, dass das Kupplungsstück und damit auch der Richthaken sich von der Griffstückkupplung lösen können. Eine Herausnahme des Kupplungsstücks aus der Griffstückkupplung ist nur möglich, wenn sowohl der Bolzen der Arretierungseinrichtung als auch der Push-Pull-Verriegelungsring der Verriegelungseinrichtung gleichzeitig gegen die jeweilige Federkraft bewegt wird. Ein weiterer Vorteil des erfindungsgemäßen Ausbeulrichthakenwechselgriffs besteht darin, dass er mit einer Verzahnung in 15°Schritten ausgestattet ist und somit eine Anpassung in kleinen Schritten ermöglicht. Der Anwender kann somit mit einem Ausbeulrichthakenwechselgriff für verschiedene Ausbeulrichthaken, die mit einem angepassten Kupplungsstück versehen sind, verwenden.

Das Kupplungsstück weist vorteilhafterweise einen axialen Hohlraum mit einer stirnseitigen Wand zur Aufnahme des Schaftes des Ausbeulrichthakens auf. Damit kann das Kupplungsstück fest mit dem Schaft verbunden werden. Der axiale Hohlraum kann bei einer Ausführungsform einen runden Querschnitt aufweisen, so dass eine Fixierung des Schaftes in dem Kupplungsstück durch Schweißen oder Kleben oder andere geeignete Maßnahmen erforderlich ist. Eine andere Möglichkeit besteht darin, dass zumindest in dem einstecken Bereich des Schaftes in das Kupplungsstück der Hohlraum einen mehrkantigen Querschnitt aufweist, sodass ein Verdrehen des Richthakens gegenüber dem Kupplungsstück bei einem entsprechend angepassten Schaftende verhindert wird. In diesem Fall müssen zusätzliche Mittel zur Verhinderung eines axialen Herausrutschens des Richthakens aus dem Hohlraum vorgesehen sein.

Das Kupplungsstück weist in einer bevorzugten Ausführungsform weiterhin zweckmäßigerweise in der stirnseitigen Wand eine axiale Bohrung zur Durchführung einer Arretierungseinrichtung auf. Die Arretierungseinrichtung dient dazu, das Kupplungsstück mit der Innenverzahnung in Eingriff mit der in der Griffstücckupplung angeordneten Außenverzahnung zu halten bzw. freizugeben. Nachfolgend wird die Erfindung anhand eines Ausführungsbeispiels in Verbindung mit den begleitenden Zeichnungen näher erläutert, wobei einzelne in den Ansprüchen und in der Beschreibung beschriebene Merkmale allein oder in Kombination Anwendung finden können. Es stellen dar:
- Figur 1: einen Ausbeulrichthaken in einem Ausbeulrichthakenwechselgriff;
- Figur 2: das Schaftende des Ausbeulrichthakens mit einem Kupplungsstück losgelöst von dem Ausbeulrichthakenwechselgriff;
- Figur 3: die Griffstückkupplung in der Draufsicht (Figur 3A), in einem Längsschnitt (Figur 3B), sowie in einem Querschnitt entlang der Linien A-A (Figur 3C) durch die Push-Pull-Verriegelung und in einem Querschnitt entlang der Linie B-B (Figur 3D) durch die Verzahnungen.

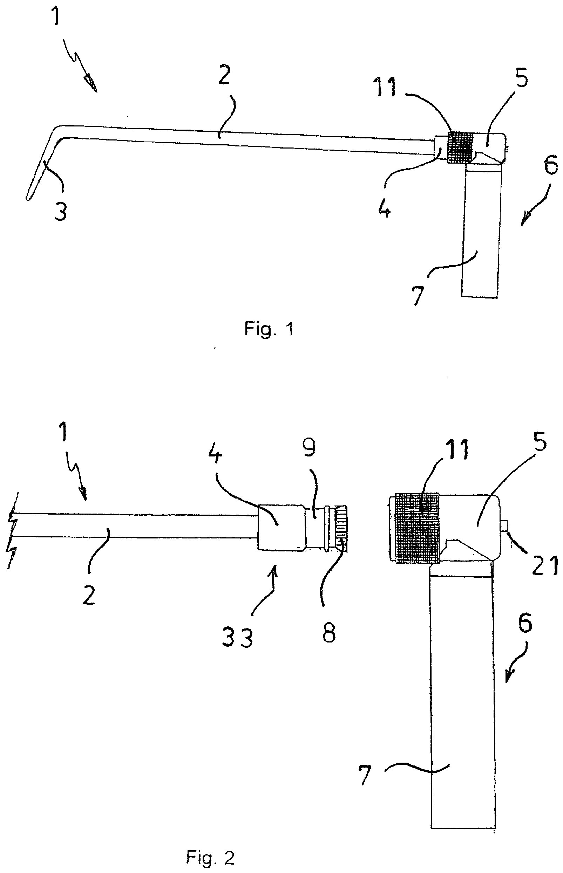

Figur 1 zeigt einen Ausbeulrichthaken 1 mit einem Schaft 2, der am einen Ende einen Haken 3 und am anderen Ende ein Kupplungsstück 4 aufweist. Der Ausbeulrichthaken 1 steckt mit dem Kupplungsstück 4 in einer Griffstückkupplung 5 eines Ausbeulrichthakenwechselgriffs 6. An der Griffstückkupplung 5 ist ein Handgriff 7, in diesem Ausführungsbeispiel rechtwinklig, zu der Griffstückkupplung 5 angeordnet ist. Selbstverständlich kann der Ausbeulrichthakenwechselgriff 6 auch eine pistolenförmige Ausgestaltung haben.

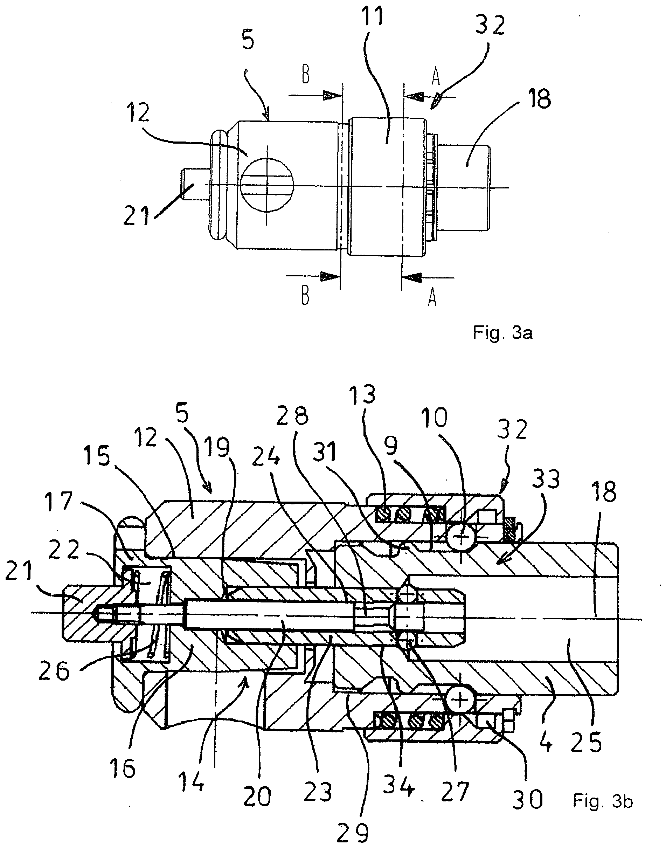

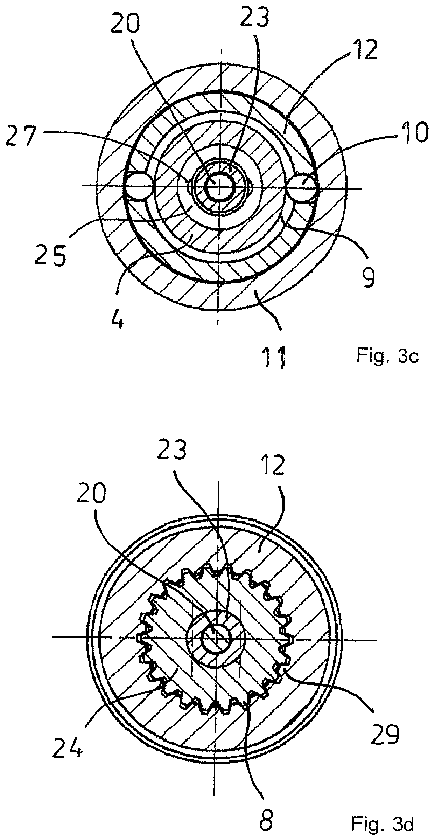

Figur 2 zeigt das Ende des Schaftes 2 des Ausbeulrichthakens 1 aus Figur 1 mit dem Kupplungsstück 4, das aus der Griffstückkupplung 5 herausgezogen ist. Das Kupplungsstück 4 weist an seinem dem Ausbeulrichthakenwechselgriff 6 zugewandten Ende eine Außenverzahnung 8 auf. Des Weiteren befindet sich am Umfang des Kupplungsstück 4 in einem auf die Griffstückkupplung 5 angepassten im Bereich 33 eine Vertiefung 9 für den Eingriff von in dieser Figur nicht dargestellten Verriegelungsmitteln 10, die in der Griffstückkupplung 5 angeordnet sind und nachfolgend in der Figur 3 dargestellt und näher beschrieben werden. An der Griffstückkupplung 5 ist außen ein Push-Pull-Verriegelungsring 11 eine Verriegelungseinrichtung 32 angeordnet.

Figur 3 zeigt detailliert in verschiedenen Darstellungen die Griffstückkupplung 5 mit eingestecktem Kupplungsstück 4. Die Griffstückkupplung 5 weist, wie bereits erwähnt, einen am Umfang angeordneten Push-Pull-Verriegelungsring 11 einer Verriegelungseinrichtung 32 auf, der an einem Kupplungsgehäuse 12 außen gegen die Kraft einer Feder 13 in axialer Richtung beweglich angebracht ist. Am stirnseitigen, dem Kupplungsstück 4 abgewandten Ende des Kupplungsgehäuses 12 ist eine Arretierungseinrichtung 14 angeordnet, die in eine axiale Bohrung 15 des Kupplungsgehäuses 12 hineinragt. Hierzu weist die Arretierungseinrichtung 14 einen Zapfen 16 auf, der durch die axiale Bohrung 15 des Kupplungsgehäuses 12 hindurchgeführt ist. Der Zapfen 15 weist einen Flansch 17 auf, der an der Stirnseite des Kupplungsgehäuses 12 zur Anlage kommt und die axiale Bohrung 15 verschließt. In der Längsachse 18 von Kupplungsstück 4 und Griffstückkupplung 5 und somit auch der axialen Bohrung 15 und des Zapfens 16 ist in dem Zapfen 16 in einer Längsbohrung 19 ein Bolzen 20 angeordnet, der mittels eines Stößels 21 gegen die Kraft einer Feder 26, die sich in einem Hohlraum 22 an dem Zapfen 16 abdrückt, in axialer Richtung in Richtung Kupplungsstück 4 bewegbar ist. Der Bolzen 20 ist in einer Hülse 23 geführt, die durch eine Bohrung 34 in der stirnseitigen Wand 24 des Kupplungsstücks 4 in einen in dem Kupplungsstück 4 angeordneten Hohlraum hineinragt. Der Hülse 23 befinden sich Arretierungsmittel 27 in Form von Kugeln, die bei der Bewegung des Bolzens 20 in Richtung Kupplungsstück 4 in einen Entriegelungsbereich 28 am Bolzen 20 in Form einer Vertiefung gelangen, wodurch eine axiale Bewegung des Kupplungsstück 4 weg von dem Zapfen 16 möglich ist. Damit gelangt die Außenverzahnung 8 am Kupplungsstück 4 außer Eingriff von der in dem Kupplungsgehäuse 12 angeordneten Innenverzahnung 29. Diese Bewegung wird jedoch durch die Verriegelungsmittel 10 der Push-Pull-Verriegelung verhindert, die in der Vertiefung 9 des Kupplungsstücks 4 eingreifen. Eine Bewegung des Kupplungsstücks 4 endet somit am anderen Ende 31 der in Figur 3 die dargestellten Vertiefung 9. Ein vollständiges Herausziehen des Kupplungsstücks 4 aus der Griffstückkupplung 5 ist nur möglich, wenn gleichzeitig die Bewegung des Push-Pull-Verriegelungsrings 11 gegen die Kraft der Feder 13 es ermöglicht, dass die Verriegelungsmittel 10 sich aus der Vertiefung 9 in die im Push-Pull-Verriegelungsring 11 angeordnete Ausnehmung 30 ausweichen können.

## Patentansprüche

1. Ausbeulrichthakenwechselgriff (6) mit einem Handgriff (7) und einer Griffstückkupplung (5), wobei die Griffstückkupplung (5) eine Aufnahme für ein mit einem Schaft (2) eines Ausbeulrichthakens (1) verbindbares oder verbundenes, an einem der Griffstückkupplung (5) zugewandten Ende eine Außenverzahnung (8) aufweisendes Kupplungsstück (4) sowie eine Verriegelungseinrichtung (32) für die lösbare Halterung des Kupplungsstücks (4) gegen eine unbeabsichtigte axiale Bewegung aus der Griffstückkupplung (5) und eine Arretierungseinrichtung (14) für eine lösbare Lagerung der Außenverzahnung (8) des Kupplungsstücks (4) in einer Innenverzahnung (29) in der Griffstückkupplung (5) aufweist, **dadurch gekennzeichnet, dass** das Kupplungsstück (4) zylindrisch ausgebildet und in die Griffstückkupplung (5) des Ausbeulrichthakenwechselgriffes (6) verdrehsicher einsteckbar ist, und dass die Verriegelungseinrichtung (32) Verriegelungsmittel (10) aufweist, die nach Art einer Push-Pull-Verriegelung ausgebildet sind und einen gegen eine Feder (13) in axialer Richtung beweglichen Push-Pull-Verriegelungsring (11) aufweisen, der bei einer Bewegung gegen die Federkraft die in eine Vertiefung (9) eingreifenden Verriegelungsmittel (10) freigibt, wobei die Verriegelungsmittel (10) in die Vertiefung (9) in einem in die Griffstückkupplung (5) einsteckbaren Bereich (33) des Kupplungsstücks (4) eingreifen.

2. Ausbeulrichthakenwechselgriff nach Anspruch 1, **dadurch gekennzeichnet, dass** die Innenverzahnung (29) mit einer an dem Kupplungsstück (4) an dem der Griffstückkupplung (5) zugewandten Ende befindliche Außenverzahnung (8) lösbar in Eingriff bringbar ist.

3. Ausbeulrichthakenwechselgriff nach Anspruch 1 oder 2, **dadurch gekennzeichnet, dass** die Griffstückkupplung (5) ein Kupplungsgehäuse (12) mit einer axialen Bohrung (15) aufweist, in die auf der einen Seite das Kupplungsstück (4) einsteckbar und auf der anderen Seite die Arretierungseinrichtung (14) für das Kupplungsstück (4) angeordnet ist.

4. Ausbeulrichthakenwechselgriff nach Anspruch 3, **dadurch gekennzeichnet, dass** die Arretierungsvorrichtung (14) eine in axialer Richtung angeordnete Hülse (23) aufweist, die durch eine stirnseitige Bohrung (34) in einen in dem Kupplungsstück (4) angeordneten Hohlraum (25) hineinragt und am Ende Arretierungsmittel (27) für das Kupplungsstück (4) aufweist.

5. Ausbeulrichthakenwechselgriff nach Anspruch 4, **dadurch gekennzeichnet, dass** die Arretierungseinrichtung (14) einen in axialer Richtung gegen die Kraft einer Feder (26) in der Hülse (23) beweglichen Bolzen (20) zur Freigabe der Arretierungsmittel (27) aufweist.

6. Ausbeulrichthakenwechselgriff nach Anspruch 5, **dadurch gekennzeichnet, dass** der Bolzen (20) im Bereich der Arretierungsmittel (27) am Umfang mindestens eine Vertiefung (28) zur Aufnahme der Arretierungsmittel (27) bei einer Bewegung des Bolzens (20) gegen die Kraft der Feder (26) aufweist, wobei die Arretierungsmittel (27) vorzugsweise mindestens eine Kugel aufweisen.

7. Ausbeulrichthaken (1) zum Einstecken in einen Ausbeulrichthakenwechselgriff (6) gemäß einem der vorstehenden Ansprüche 1 bis 6, mit einem Kupplungsstück (4) zum Einführen in die Griffstückkupplung (5) des Ausbeulrichthakenwechselgriff (6), **dadurch gekennzeichnet, dass** das Kupplungsstück (4) eine an dem der Griffstückkupplung (5) zugewandten Ende angeordnete Außenverzahnung (8) aufweist und mit einem Schaft (2) des Ausbeulrichthakens (1) verdrehsicher verbindbar oder verbunden ist, wobei das Kupplungsstück (4) eine zylindrische Form aufweist und in einem in die Griffstückkupplung (5) einsteckbaren Bereich (33) wenigstens bereichsweise eine Vertiefung (9) zur Aufnahme von in der Griffstückkupplung (5) angeordneten Verriegelungsmitteln (10) aufweist.

8. Ausbeulrichthaken nach Anspruch 7, **dadurch gekennzeichnet, dass** das Kupplungsstück (4) einen axialen Hohlraum (25) mit einer stirnseitigen Wand (24) zur Aufnahme des Schaftes (2) des Ausbeulrichthakens (1) aufweist, wobei in der stirnseitigen Wand (24) eine axiale Bohrung (34) zur Durchführung der Arretierungseinrichtung (14) angeordnet ist.

## Claims

1. Changeable handle for flattening alignment hook (6) with a hand grip (7) and a handle element coupling (5), whereby the handle element coupling (5) comprises a receiver for a coupling element (4) that is connected to or connectable to a shaft (2) of a flattening alignment hook (1) and that includes an external toothing (8) arranged at an end facing the handle element coupling (5) and an interlocking device (32) for a disengageable support of the coupling element (4) against an unintentional axial movement out of the handle element coupling (5) and an arresting device (14) for a disengageable support of the external toothing (8) of the coupling element (4) in an inner toothing (29) in the handle element coupling (5), **characterized in that** the coupling element (4) has a cylindrical shape and is insertable into the handle element coupling (5) of the changeable handle for flattening alignment hook (6) in a non-twistable manner, and that the interlocking device (32) comprises locking means (10) that are designed in the manner of a push-pull locking device and include a push-pull interlocking ring (11) that is movable against a force of a spring (13) in an axial direction and that when it is moved against the force of the spring (13) releases the interlocking means (10) which engage a recess (9), whereby the interlocking means (10) engage the recess (9) arranged at least in portions of a portion (33) that is insertable into the handle element coupling (5) of the coupling element (4).

2. Changeable handle for flattening alignment hook according to claim 1 **characterized in that** the inner toothing (29) is detachably engageable with an external toothing arranged at an end of the coupling element (4) oriented towards the handle element coupling (5).

3. Changeable handle for flattening alignment hook according to claim 1 or 2, **characterized in that** the handle element coupling (5) includes a coupling housing (12) with an axial drilling (15), wherein the coupling element (4) is insertable into the axial drilling (15) on one side, and wherein the arresting device (14) for the coupling element (4) is arranged in the axial drilling (12) on another side.

4. Changeable handle for flattening alignment hook according to claim 3, **characterized in that** the arresting device (14) includes an axially arranged sleeve (23) which protrudes through a face drilling (34) into a cavity (25) arranged in the coupling element (4), and wherein the axially arranged sleeve (23) includes arresting means (27) for the coupling element (4) at one end.

5. Changeable handle for flattening alignment hook according to claim according to claim 4, **characterized in that** the arresting device (14) includes a bolt (20) that is movable in the sleeve (23) in the axial direction against a force of a spring (26) to release the arresting means (27).

6. Changeable handle for flattening alignment hook according to claim according to claim 5, **characterized in that** the bolt (20) includes at least one recess (28) in a portion of the arresting means (27) at a circumference in order to receive the arresting means (27) when the bolt (20) moves against a force of the spring (26), whereby the arresting means (27) preferably include at least one bearing ball.

7. Flattening alignment hook (1) for insertion into a changeable handle for flattening alignment hook (6) according to one of the preceding claims 1 to 6, including a coupling element (4) for insertion into the handle element coupling (5) of the changeable handle for flattening alignment hook (6), **characterized in that** the coupling element (4) includes an outer toothing (8) that is arranged at an end that is oriented towards the handle element coupling (5) and is connected to or connectable to a shaft (2) of the flattening alignment hook (1) in a non-twistable manner, whereby the coupling element (4) has a cylindrical shape and includes a recess (9) at least in portions of a portion (33) that is insertable into the handle element coupling (5) being configured to receive locking means (10) arranged in the handle element coupling (5).

8. Flattening alignment hook according to claim 7, **characterized in that** the coupling element (4) comprises an axial cavity (25) with a face wall (24) for receiving the shaft (2) of the flattening alignment hook (1), whereby the face wall (24) includes an axial drilling (34) for passing the arresting device (14) through.

## Revendications

1. Poignée remplaçable (6) pour crochets redresseurs de débosselage, comprenant une poignée (7) et un accouplement (5) à pièce d'enfichage, lequel accouplement (5) à pièce d'enfichage comporte un logement destiné à une pièce d'accouplement (4) reliée, ou pouvant être reliée à un fût (2) d'un crochet redresseur de débosselage (1), et munie d'une denture extérieure (8) à une extrémité tournée vers ledit accouplement (5) à pièce d'enfichage, ainsi qu'un dispositif de verrouillage (32) affecté à la retenue libérable de ladite pièce d'accouplement (4) en prévenant un mouvement axial involontaire de cette dernière, la faisant sortir dudit accouplement (5) à pièce d'enfichage, et un dispositif d'arrêt (14) dévolu à un montage libérable de la denture extérieure (8) de ladite pièce d'accouplement (4) dans une denture intérieure (29) située dans ledit accouplement (5) à pièce d'enfichage, **caractérisée par le fait que** la pièce d'accouplement (4) est de réalisation cylindrique et peut être emboîtée, avec blocage rotatif, dans l'accouplement (5) à pièce d'enfichage de ladite poignée remplaçable (6) pour crochets redresseurs de débosselage ; et **par le fait que** le dispositif de verrouillage (32) comporte des moyens de verrouillage (10) réalisés à la manière d'un verrouillage du type poussée-traction et pourvus d'une bague (11) de verrouillage par poussée-traction, qui est mobile dans le sens axial en opposition à un ressort (13) et qui, lors d'un mouvement en opposition à la force dudit ressort, libère lesdits moyens de verrouillage (10) pénétrant dans un renfoncement (9), lesquels moyens de verrouillage (10) pénètrent alors dans le renfoncement (9) ménagé dans une région (33) de ladite pièce d'accouplement (4) qui peut être emboîtée dans ledit accouplement (5) à pièce d'enfichage.

2. Poignée remplaçable pour crochets redresseurs de débosselage, selon la revendication 1, **caractérisée par le fait que** la denture intérieure (29) peut être mise en prise libérable avec une denture extérieure (8) située, sur la pièce d'accouplement (4), à l'extrémité tournée vers l'accouplement (5) à pièce d'enfichage.

3. Poignée remplaçable pour crochets redresseurs de débosselage, selon la revendication 1 ou 2, **caractérisée par le fait que** l'accouplement (5) à pièce d'enfichage est doté d'un boîtier d'accouplement (12) percé d'un alésage axial (15) dans lequel la pièce d'accouplement (4) peut être emboîtée, sur l'un des côtés, et sur l'autre côté duquel se trouve le dispositif d'arrêt (14) dévolu à ladite pièce d'accouplement (4).

4. Poignée remplaçable pour crochets redresseurs de débosselage, selon la revendication 3, **caractérisée par le fait que** le dispositif d'arrêt (14) est muni d'une douille (23) qui est implantée dans le sens axial, parcourt un alésage frontal (34) pour s'engager dans une cavité (25) située dans la pièce d'accouplement (4) et est pourvue, à l'extrémité, de moyens d'arrêt (27) affectés à ladite pièce d'accouplement (4).

5. Poignée remplaçable pour crochets redresseurs de débosselage, selon la revendication 4, **caractérisée par le fait que** le dispositif d'arrêt (14) est muni d'un tourillon (20) mobile axialement dans la douille (23), en opposition à la force d'un ressort (26), en vue de libérer les moyens d'arrêt (27).

6. Poignée remplaçable pour crochets redresseurs de débosselage, selon la revendication 5, **caractérisée par le fait que** le tourillon (20) est doté sur son pourtour, dans la région des moyens d'arrêt (27), d'au moins un renfoncement (28) réalisé pour recevoir lesdits moyens d'arrêt (27) lors d'un mouvement dudit tourillon (20) en opposition à la force du ressort (26), lesquels moyens d'arrêt (27) sont préférentiellement pourvus d'au moins une bille.

7. Crochet redresseur de débosselage (1) conçu pour être emboîté dans une poignée remplaçable (6) conforme à l'une des revendications 1 à 6 précédentes, comportant une pièce d'accouplement (4) destinée à être introduite dans l'accouplement (5) à pièce d'enfichage de ladite poignée remplaçable (6), **caractérisé par le fait que** la pièce d'accouplement (4) est munie d'une denture extérieure (8) à l'extrémité tournée vers l'accouplement (5) à pièce d'enfichage, et est reliée ou peut être reliée, avec blocage rotatif, à un fût (2) dudit crochet redresseur de débosselage (1), ladite pièce d'accouplement (4) étant de forme cylindrique et étant pourvue au moins par zones, dans une région (33) pouvant être emboîtée dans l'accouplement (5) à pièce d'enfichage, d'un renfoncement (9) réalisé pour recevoir des moyens de verrouillage (10) logés dans ledit accouplement (5) à pièce d'enfichage.

8. Crochet redresseur de débosselage selon la revendication 7, **caractérisé par le fait que** la pièce d'accouplement (4) présente une cavité axiale (25) dotée d'une paroi frontale (24), en vue de recevoir le fût (2) dudit crochet redresseur de débosselage (1), un alésage axial (34) étant pratiqué dans ladite paroi frontale (24), pour offrir un passage au dispositif d'arrêt (14).
